# EUROPEAN PATENT SPECIFICATION

(11) **EP 3 255 762 B1**
(45) Date of publication and mention of the grant of the patent: **23.01.2019**
(21) Application number: 17162966.0
(22) Date of filing: 27.03.2017
(51) Int. Cl.: H02P 9/02, H02K 19/36, H02J 7/00, H02J 7/14

(54) **SWITCHED RELUCTANCE GENERATOR BASED AUTOMOTIVE POWER GENERATING SYSTEM**
KRAFTFAHRZEUGENERGIEERZEUGUNGSSYSTEM BASIEREND AUF EINEM GESCHALTETEN RELUKTANZGENERATOR
SYSTÈME DE GÉNÉRATION ÉLECTRIQUE D'AUTOMOBILE À BASE DE GÉNÉRATEUR À RÉLUCTANCE COMMUTÉE

(30) Priority: 08.06.2016 US 201615176277
(43) Date of publication of application: 13.12.2017
(73) Proprietor: Hamilton Sundstrand Corporation, Charlotte, NC 28217 (US)
(72) Inventor: ROZMAN, Gregory I., Rockford, IL 61114 (US); GIERAS, Jacek F., Glastonbury, CT 06033 (US); MOSS, Steven J., Rockford, IL 61114 (US)
(74) Representative: Dehns

(56) References cited:
- WO-A1-2011/109514
- US-A1- 2004 189 248
- US-A1- 2010 133 025

## Description

### TECHNICAL FIELD

The present disclosure relates generally to automotive power generating systems, and more specifically to an automotive power generating system including a switched reluctance generator

### BACKGROUND

Certain vehicles, such as automotive vehicles, utilize hybrid electric technology including high voltage DC power generating. Due to their high power density, synchronous permanent magnet generators are used in many applications where weight and/or size are particularly important. Some power system architectures in such an example include permanent magnet generators coupled to a boost-type pulse width modulated converter (alternately referred to as an active rectifier) and a high voltage battery. In some applications, the near constant power load over the duration of the operating time can be accompanied by high peak loads during a portion of the operating time.

To support the peak power requirements, rechargeable high energy storage devices, such as batteries, are included within the power generating system. When peak power is required, the energy stored within the high energy storage devices supplements the energy provided by the generator. Conversely, while under a base load condition, the generator creates excess energy, and the energy is stored within the high energy storage devices. In addition to preventing battery damage and providing safe charging and re-charging, some systems are configured to absorb regenerative power from regenerative loads, such as motor drives.

US 2010/0133025 relates to expandable energy storage control system architecture.

### SUMMARY OF THE INVENTION

In one exemplary embodiment a power generating system architecture includes a prime mover, a generator component including a switched reluctance generator, the switched reluctance generator being mechanically coupled to the prime mover and having a plurality of stator pole windings, a DC power bus connected to at least one output of the switched reluctance generator, the DC power bus including a positive bus bar and a negative bus bar, at plurality of series arranged energy storage devices connecting the positive bus bar and the negative bus bar, a plurality of state of charge modules connected to the plurality of energy storage devices, each of the state of charge modules being communicatively coupled to a generator controller, and the generator controller being configured to independently control each of the stator pole windings.

In another exemplary embodiment of the above described power generating system architecture the plurality of energy storage device includes at least one of a lithium ion battery and a super capacitor.

Another exemplary embodiment of any of the above described power generating system architectures further includes a high voltage high peak load connected between the positive bus bar and the negative bus bar.

Another exemplary embodiment of any of the above described power generating system architectures further includes a regenerative load connected between the positive bus bar and the negative bus bar.

Another exemplary embodiment of any of the above described power generating system architectures further includes a DC-DC converter connected between the positive bus bar and the negative bus bar, and including a DC power output, wherein the DC power output is connected to at least one of the generator controller and a state of charge module in the plurality of state of charge modules.

In another exemplary embodiment of any of the above described power generating systems the number of switched reluctance generator stator pole windings is at least equal to the number of energy storage devices, and wherein each of the energy storage devices corresponds to one of the stator pole windings.

In another exemplary embodiment of any of the above described power generating systems each of the energy storage devices is integrated with the corresponding stator pole winding via at least an asymmetric H-bridge.

In another exemplary embodiment of any of the above described power generating systems each of the asymmetric H-bridges is communicatively coupled to the controller, and is configured to convert a commanded control current for the stator pole winding into asymmetric H-bridge operations.

In another exemplary embodiment of any of the above described power generating systems the generator control unit includes a memory storing instructions configured to cause the generator controller to detect an imbalance in the plurality of series arranged energy storage devices, and to alter a stator pole current in at least one stator pole winding corresponding to an energy storage device that is out of balance.

An exemplary method for re-balancing power storage devices within a power generating system includes identifying at least one high energy storage device in a plurality of high energy storage device as having a reduced charge relative to a remained of high energy storage devices, and increasing a control current to a switched reluctance generator stator pole winding corresponding to the identified at least one high energy storage device.

In another example of the above described exemplary method for re-balancing power storage devices within a power generating system identifying the at least one high energy storage device includes analyzing data received from a plurality of state of charge modules using a generator controller, wherein each state of charge module corresponds to a unique high energy storage device.

In another example of any of the above described exemplary methods for re-balancing power storage devices within a power generating system analyzing the data comprises comparing a detected state of charge of each high energy storage device.

Another example of any of the above described exemplary methods for re-balancing power storage devices within a power generating system further includes providing operational power to a generator control unit and to each of a plurality of state of charge modules from a single DC-DC converter.

Another example of any of the above described exemplary methods for re-balancing power storage devices within a power generating system further includes charging the at least one high energy storage device, relative to a remainder of the high energy storage devices, by altering a stator pole winding current of corresponding stator pole in a switched reluctance generator.

In another example of any of the above described exemplary methods for re-balancing power storage devices within a power generating system altering a stator pole winding current comprises providing a commanded stator pole winding current to a current regulator, converting the commanded stator pole winding current to asymmetric H-bridge operations using the current regulator, and generating the stator pole winding current using the asymmetric H-bridge.

These and other features of the present invention can be best understood from the following specification and drawings, the following of which is a brief description.

### BRIEF DESCRIPTION OF THE DRAWINGS

Figure 1 schematically illustrates a high voltage power generating system according to one example.
Figure 2 schematically illustrates a control configuration for the high voltage power generating system of Figure 1.
Figure 3 illustrates a method for correcting an imbalance in a set of power storage devices.

### DETAILED DESCRIPTION OF AN EMBODIMENT

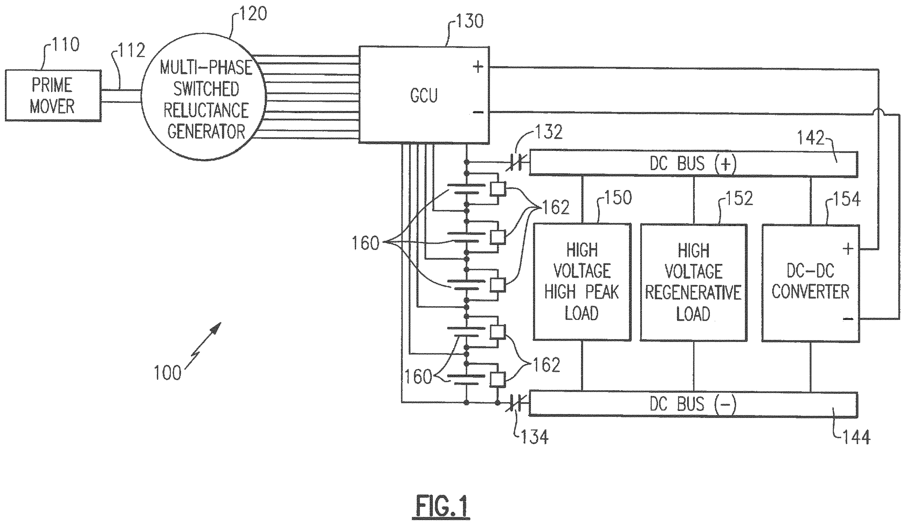

Figure 1 schematically illustrates an exemplary high voltage power generating system 100 for utilization in an automotive vehicle. The power generating system 100 includes a prime mover 110 connected to a generator system 120 via a shaft 112. The shaft 112 translates rotational motion from the prime mover 110 to a mechanical input of the generator system 120. In alternative examples, any other means of translating motion from the prime mover 110 to the generator system 120 can be utilized in place of the illustrated shaft 112, with only minor alterations to the power generating system 100.

In the example of Figure 1, the generator system 120 includes at least one switched reluctance generator. The switched reluctance generator is connected to, and controlled by, a generator control unit 130. The switched reluctance generator generates electrical power from the rotational energy. The generator control unit 130 is connected to a positive bus bar 142 via a first switch 132 and to a negative bus bar 144 via a second switch 134. The positive bus bar 142 and the negative bus bar 144 form a DC power generating bus. Multiple loads are connected to the DC power generating bus including an exemplary high voltage high peak load, 150, an exemplary high voltage regenerative load 152 and a DC-DC converter 154.

The high voltage high peak load 150 is a typical automotive load that operates at (draws) a baseline energy for a majority of operations. The operations of the high voltage high peak load 150 also include occasional peak periods, where a substantially higher energy draw is required to operate the load 150. The high voltage regenerative load 152, similarly operates at a baseline energy draw during typical operations. In some modes, the regenerative load 152 can generate energy instead of drawing energy. These operations are referred to as being regenerative, and provide energy back to the DC bus. The DC-DC converter 154 steps down the voltage from the positive and negative voltage rails 142, 144 of the DC bus and provides operational energy to the generator, control unit 130. In some examples, the DC-DC converter 154 can also be utilized to provide operational power to one or more additional components. In yet further examples, a low voltage energy storage device, or a small sized permanent magnet generator can be included within the system 100, and provide operational power to the generator control unit 130 and similar systems in lieu of the DC-DC converter 154. In such examples, the DC-DC converter 154 is omitted entirely, and no DC-DC converter is utilized in the charging process.

The illustrated high voltage high peak load 150 and high voltage regenerative load 152 are exemplary in nature. A practical system can include multiple loads of either type connected across the negative bus bar 144 and the positive bus bar 142, and operate in the manner described herein.

Also connected across the positive bus 142 and the negative bus 144 is a set of high energy storage devices 160, such as lithium ion batteries, supercapacitors, and the like. The high energy storage devices 160 are arranged in series, and are configured to supplement the power provided to the positive and negative busses 142, 144 when the high voltage high peak load 150 is drawing a power in excess of power generated by the generator system 120. In contrast, when power is being provided back to the power generating system 100 by the regenerative load 152, the power can be utilized to charge or re-charge the high energy storage devices 160. In some alternative examples, the energy from the regenerative load 152 can be redirected to a power dissipating resistor when it is not needed to charge the high energy storage devices 160. In yet further examples, the switched reluctance generator can be reconfigured by the generator control unit 130, according to known techniques, to operate as a motor and provide rotational input to the prime mover 110 via the shaft 112 when the regenerative load 152 provides power back.

Connected to, and monitoring, each of the high energy storage devices 160 is a state of charge module 162. The state of charge modules 162 include sensors for detecting current, voltage, temperature, and the like of each of the high energy storage devices 160. The sensed values are then communicated to the generator control unit 130 which determines a current state of charge of the high energy storage device 160 based on the sensed values according to any known state of charge determination technique. In alternative examples, each state of charge module 162 can include a processor and determine the state of charge of the corresponding high energy storage device 160 independently. In such an example, only the state of charge is communicated to the generator control unit 130.

As described above, the generator system 120 includes a switched reluctance generator. Each of the high energy storage devices 160 is integrated with the switched reluctance generator and is configured to be charged by a corresponding switched reluctance generator channel.

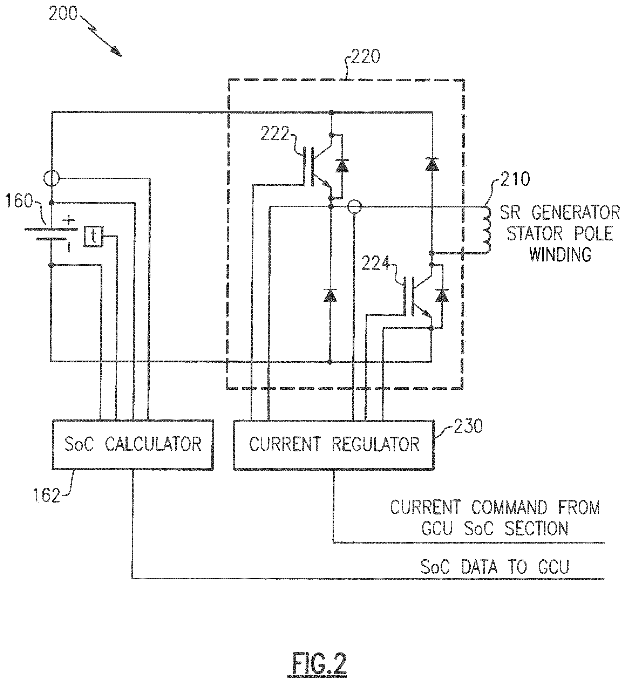

With continued reference to Figure 1, Figure 2 schematically illustrates the integration of a single high energy storage device 160 with a channel of the switched reluctance generator within the generator system 120. The high energy storage device 160 is integrated with a switched reluctance generator stator winding 210 via an asymmetric H-bridge 220 circuit. Also included within the integration between the high energy storage device 160 and the switched reluctance generator channel is a current regulator 230 that is communicatively coupled to the generator control unit 130, and configured to regulate the current through the switched reluctance generator stator winding 210 by manipulation of the asymmetric H-bridge 220.

The current in the stator winding 210 is controlled by the generator control unit 130 in response to the information received from the state of charge module 162 corresponding to the high energy storage device 160 in the switched reluctance generator channel 200. By controlling the current passing through the switched reluctance generator stator pole winding 210, the generator control unit 130 controls the power provided to the corresponding high energy storage device 160, thereby enabling the generator control unit 130 to charge or re-charge each of the high energy storage devices 160. As each high energy storage device 160 is within its own channel 200, and corresponds to a unique stator winding 210, the generator control unit 130 is capable of charging or re-charging each high energy storage device 160 independently of each other high energy storage device 160.

In some circumstances it is possible for one or more of the high energy storage devices 160 to discharge more, or less, energy during a peak load than a remainder of the high energy storage devices 160. This results in the overall state of charge of the high energy storage devices 160 being different, and is referred to as an imbalance in the state of charge. By independently controlling the current through each switched reluctance generator stator winding 210, the generator control unit 130 is able to actively correct an imbalance without overcharging or undercharging the high energy storage devices 160.

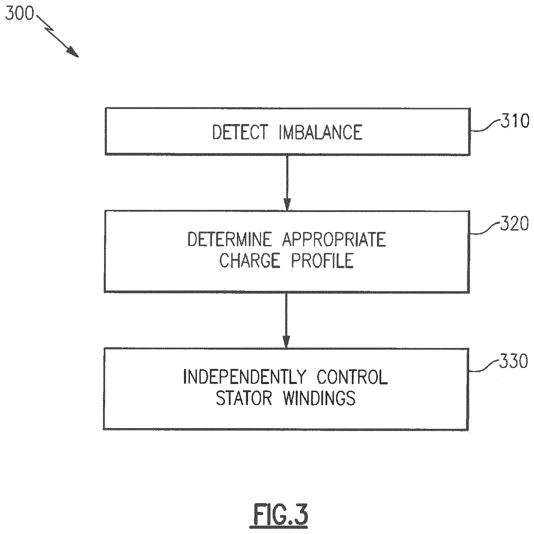

With continued reference to Figures 1 and 2, Figure 3 illustrates a method for re-balancing high-energy storage devices 160 within a DC power generating system including a switched reluctance generator. Initially, the generator control unit 130 detects an imbalance between the state of charge within the set of series arranged high energy storage devices 160 in a "Detect Imbalance" step 310.

Once an imbalance has been detected, the generator control unit 130 determines an appropriate control current for each stator winding of the switched reluctance generator in a "Determine Appropriate Charge Profile" step 320. As each high energy storage device 160 is connected to a single corresponding stator winding 210, the provision of distinct control currents to each stator winding 210 provides a distinct charging profile to the corresponding high energy storage device 160, allowing the high energy storage devices 160 to be simultaneously re-balanced.

Once the generator control unit 130 has determined the appropriate charge profile for each high energy storage device 160, the generator control unit 130 independently controls each of the stator windings 210 in an "Independently Control Stator Windings" step 330. The independent control charges the high energy storage devices 160 and re-balances the charge.

In some examples, the state of charge modules 162 can continuously monitor the state of charge of their corresponding high energy storage devices 160 during the charging process, thereby allowing the generator control unit 130 to adapt the charging profile of one or more high energy storage devices 160 on the fly.

While described above in reference to a DC power generating system for an automotive vehicle, one of skill in the art having he benefit of this disclosure will understand that the principles and configurations described herein can be applied to any DC power generating system and are not limited in application to automotive vehicles.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A power generating system architecture comprising:
a prime mover (110);
a generator component including a switched reluctance generator (200), the switched reluctance generator (200) being mechanically coupled to the prime mover (110) and having a plurality of stator pole windings (210);
a DC power bus connected to at least one output of the switched reluctance generator, the DC power bus including a positive bus bar (142) and a negative bus bar (144);
a plurality of series arranged energy storage devices (160) connecting the positive bus bar (142) and the negative bus bar (144);
a plurality of state of charge modules (162) connected to said plurality of energy storage devices (160), each of said state of charge modules (162) being communicatively coupled to a generator controller; and
the generator controller (130) being configured to independently control each of said stator pole windings (210).

2. The power generating system architecture of claim 1, wherein said plurality of energy storage devices (160) includes at least one of a lithium ion battery and a super capacitor.

3. The power generating system architecture of claim 1, further comprising a high voltage high peak load connected between said positive bus bar (142) and said negative bus bar (144).

4. The power generating system architecture of claim 1, further comprising a regenerative load connected between said positive bus bar (142) and said negative bus bar (144).

5. The power generating system architecture of claim 1 further comprising a DC-DC converter (154) connected between said positive bus bar (142) and said negative bus bar (144), and including a DC power output, wherein the DC power output is connected to at least one of the generator controller (130) and a state of charge module (162) in the plurality of state of charge modules (162).

6. The power generating system architecture of claim 1, wherein the number of switched reluctance generator stator pole windings (210) is at least equal to the number of energy storage devices, and wherein each of said energy storage devices corresponds to one of said stator pole windings.

7. The power generating system architecture of claim 6, wherein each of said energy storage devices (160) is integrated with the corresponding stator pole winding via at least an asymmetric H-bridge.

8. The power generating system architecture of claim 7, wherein each of said asymmetric H-bridges is communicatively coupled to said controller, and is configured to convert a commanded control current for said stator pole winding into asymmetric H-bridge operations.

9. The power generating system architecture of claim 7, wherein the generator control unit (130) includes a memory storing instructions configured to cause the generator controller to detect an imbalance in the plurality of series arranged energy storage devices, and to alter a stator pole current in at least one stator pole winding corresponding to an energy storage device that is out of balance.

10. A method for re-balancing power storage devices within a power generating system comprising:
identifying at least one high energy storage device in a plurality of high energy storage device as having a reduced charge relative to a remained of high energy storage devices; and
increasing a control current to a switched reluctance generator stator pole winding corresponding to the identified at least one high energy storage device.

11. The method of claim 10, wherein identifying the at least one high energy storage device includes analyzing data received from a plurality of state of charge modules using a generator controller, wherein each state of charge module corresponds to a unique high energy storage device.

12. The method of claim 11, wherein analyzing the data comprises comparing a detected state of charge of each high energy storage device.

13. The method of claim 10, further comprising providing operational power to a generator control unit and to each of a plurality of state of charge modules from a single DC-DC converter.

14. The method of claim 10, further comprising charging the at least one high energy storage device, relative to a remainder of the high energy storage devices, by altering a stator pole winding current of corresponding stator pole in a switched reluctance generator.

15. The method of claim 14, wherein altering a stator pole winding current comprises providing a commanded stator pole winding current to a current regulator, converting the commanded stator pole winding current to asymmetric H-bridge operations using said current regulator, and generating the stator pole winding current using said asymmetric H-bridge.

## Patentansprüche

1. Energieerzeugungssystemarchitektur, umfassend:
einen Primärantrieb (110);
eine Generatorkomponente, die einen geschalteten Reluktanzgenerator (200) umfasst, wobei der geschaltete Reluktanzgenerator (200) mechanisch mit dem Primärantrieb (110) verbunden ist und eine Vielzahl von Statorpolwicklungen (210) aufweist;
eine Gleichstromsammelschiene, die mit mindestens einem Ausgang des geschalteten Reluktanzgenerators verbunden ist, wobei die Gleichstromsammelschiene einen positiven Sammelschienenleiter (142) und einen negativen Sammelschienenleiter (144) umfasst;
eine Vielzahl von hintereinandergeschalteten Energiespeichern (160), die den positiven Sammelschienenleiter (142) und den negativen Sammelschienenleiter (144) verbinden;
eine Vielzahl von Ladezustandsmodulen (162), die mit der Vielzahl von Energiespeichern (160) verbunden sind, wobei jedes der Ladezustandsmodule (162) in kommunikativer Verbindung mit einer Generatorsteuerung steht; und
wobei die Generatorsteuerung (130) konfiguriert ist, um jede der Statorpolwicklungen (210) unabhängig zu steuern.

2. Energieerzeugungssystemarchitektur nach Anspruch 1, wobei die Vielzahl von Energiespeichern (160) mindestes eines aus einem Lithium-Ionen-Akkumulator und einem Superkondensator umfasst.

3. Energieerzeugungssystemarchitektur nach Anspruch 1, weiter umfassend eine Hochspannungsspitzenlast, die zwischen dem positiven Sammelschienenleiter (142) und dem negativen Sammelschienenleiter (144) angeschlossen ist.

4. Energieerzeugungssystemarchitektur nach Anspruch 1, weiter umfassend eine regenerative Last, die zwischen dem positiven Sammelschienenleiter (142) und dem negativen Sammelschienenleiter (144) angeschlossen ist.

5. Energieerzeugungssystemarchitektur nach Anspruch 1, weiter umfassend einen Gleichstromwandler (154), der zwischen dem positiven Sammelschienenleiter (142) und dem negativen Sammelschienenleiter (144) angeschlossen ist, und einen Gleichstromleistungsausgang umfasst, wobei der Gleichstromleistungsausgang mit mindestens einem aus der Generatorsteuerung (130) und einem Ladezustandsmodul (162) aus der Vielzahl von Ladezustandsmodulen (162) verbunden ist.

6. Energieerzeugungssystemarchitektur nach Anspruch 1, wobei die Anzahl der Statorpolwicklungen (210) des geschalteten Reluktanzgenerators mindestens genauso hoch ist wie die Anzahl der Energiespeicher und wobei jeder der Energiespeicher einer der Statorpolwicklungen entspricht.

7. Energieerzeugungssystemarchitektur nach Anspruch 6, wobei jeder der Energiespeicher (160) mit der entsprechenden Statorpolwicklung über mindestens eine asymmetrische H-Brücke verbunden ist.

8. Energieerzeugungssystemarchitektur nach Anspruch 7, wobei jede der asymmetrischen H-Brücken kommunikativ mit der Steuerung verbunden ist und konfiguriert ist, um einen Soll-Steuerstrom für die Statorpolwicklung in Betätigungen der asymmetrischen H-Brücke umzuwandeln.

9. Energieerzeugungssystemarchitektur nach Anspruch 7, wobei die Generatorsteuereinheit (130) einen Speicher umfasst, der Anweisungen speichert, die konfiguriert sind, um zu bewirken, dass die Generatorsteuerung ein Ungleichgewicht in der Vielzahl von hintereinandergeschalteten Energiespeichern erkennt, und um einen Statorpolstrom in mindestens einer Statorpolwicklung, die einem Energiespeicher entspricht, der im Ungleichgewicht ist, zu ändern.

10. Verfahren zum Wiederausgleichen von Energiespeichern innerhalb eines Energieerzeugungssystems, umfassend:
Identifizieren mindestens eines Hochenergiespeichers in einer Vielzahl von Hochenergiespeichern als eine verringerte Ladung im Verhältnis zu einem Rest der Hochenergiespeicher aufweisend; und
Erhöhen eines Steuerstroms zu einer Statorpolwicklung des geschalteten Reluktanzgenerators, die dem identifizierten mindestens einen Hochenergiespeicher entspricht.

11. Verfahren nach Anspruch 10, wobei das Identifizieren des mindestens einen Hochenergiespeichers das Analysieren von Daten, die von einer Vielzahl von Ladezustandsmodulen empfangen wurden, unter Verwendung einer Generatorsteuerung umfasst, wobei jedes Ladezustandsmodul einem einzigen Hochenergiespeicher entspricht.

12. Verfahren nach Anspruch 11, wobei das Analysieren der Daten das Vergleichen eines erkannten Ladezustands jedes der Hochenergiespeicher umfasst.

13. Verfahren nach Anspruch 10, weiter umfassend das Bereitstellen von Betriebsleistung für eine Generatorsteuereinheit und für jedes aus einer Vielzahl von Ladezustandsmodulen von einem einzigen Gleichstromwandler.

14. Verfahren nach Anspruch 10, weiter umfassend das Laden des mindestens einen Hochenergiespeichers im Verhältnis zu einem Rest der Hochenergiespeicher durch Verändern eines Statorpolwicklungsstroms des entsprechenden Statorpols in einem geschalteten Reluktanzgenerator.

15. Verfahren nach Anspruch 14, wobei das Verändern eines Statorpolwicklungsstroms das Bereitstellen eines Soll-Statorpolwicklungsstroms für einen Stromregler, das Umwandeln des Soll- Statorpolwicklungsstroms in Betätigungen der asymmetrischen H-Brücke unter Verwendung des Stromreglers und das Erzeugen des Statorpolwicklungsstroms unter Verwendung der asymmetrischen H-Brücke umfasst.

## Revendications

1. Architecture de système de génération électrique comprenant :
un appareil moteur (110) ;
un composant de générateur incluant un générateur à reluctance commutée (200), le générateur à reluctance commutée (200) étant mécaniquement couplé à l'appareil moteur (110) et ayant une pluralité d'enroulements de pôle de stator (210) ;
un bus d'alimentation c.c connecté à au moins une sortie du générateur à reluctance commutée, le bus d'alimentation c.c incluant une barre omnibus positive (142) et une barre omnibus négative (144) ;
une pluralité de dispositifs d'accumulation d'énergie agencés en série (160) connectant la barre omnibus positive (142) et la barre omnibus négative (144) ;
une pluralité de modules d'état de charge (162) connectés à ladite pluralité de dispositifs d'accumulation d'énergie (160), chacun desdits modules d'état de charge (162) étant couplé en communication à une unité de commande de générateur ; et
l'unité de commande de générateur (130) étant configurée pour commander indépendamment chacun desdits enroulements de pôle de stator (210).

2. Architecture de système de génération électrique selon la revendication 1, dans laquelle ladite pluralité de dispositifs d'accumulation d'énergie (160) inclut au moins l'un d'une batterie à lithium-ion et d'un supercondensateur.

3. Architecture de système de génération électrique selon la revendication 1, comprenant en outre une charge haute tension haute crête connectée entre ladite barre omnibus positive (142) et ladite barre omnibus négative (144).

4. Architecture de système de génération électrique selon la revendication 1, comprenant en outre une charge régénérative connectée entre ladite barre omnibus positive (142) et ladite barre omnibus négative (144).

5. Architecture de système de génération électrique selon la revendication 1, comprenant en outre un convertisseur c.c-c.c (154) connecté entre ladite barre omnibus positive (142) et ladite barre omnibus négative (144), et incluant une sortie d'alimentation c.c, dans laquelle la sortie d'alimentation c.c est connectée à au moins l'un de l'unité de commande de générateur (130) et d'un module d'état de charge (162) dans la pluralité de modules d'état de charge (162).

6. Architecture de système de génération électrique selon la revendication 1, dans laquelle le nombre d'enroulements de pôle de stator (210) du générateur à reluctance commutée est au moins égal au nombre de dispositifs d'accumulation d'énergie, et dans laquelle chacun desdits dispositifs d'accumulation d'énergie correspond à l'un desdits enroulements de pôle de stator.

7. Architecture de système de génération électrique selon la revendication 6, dans laquelle chacun desdits dispositifs d'accumulation d'énergie (160) est intégré avec l'enroulement de pôle de stator correspondant via au moins un pont en H asymétrique.

8. Architecture de système de génération électrique selon la revendication 7, dans laquelle chacun desdits ponts en H asymétriques est couplé en communication à ladite unité de commande, et est configuré pour convertir un courant de commande passé en ordre pour ledit enroulement de pôle de stator en opérations de pont en H asymétrique.

9. Architecture de système de génération électrique selon la revendication 7, dans laquelle l'unité de commande de générateur (130) inclut des instructions de stockage en mémoire configurées pour amener l'unité de commande de générateur à détecter un déséquilibre dans la pluralité de dispositifs d'accumulation d'énergie agencés en série, et modifier un courant de pôle de stator dans au moins un enroulement de pôle de stator correspondant à un dispositif d'accumulation d'énergie qui est hors équilibre.

10. Procédé de rééquilibrage de dispositifs d'accumulation d'énergie au sein d'un système de génération électrique comprenant :
l'identification d'au moins un dispositif de haute accumulation d'énergie dans une pluralité de dispositifs de haute accumulation d'énergie comme ayant une charge réduite par rapport à un dispositif restant parmi les dispositifs de haute accumulation d'énergie ; et
l'augmentation d'un courant de commande à destination d'un enroulement de pôle de stator de générateur à reluctance commutée correspondant à l'au moins un dispositif de haute accumulation d'énergie identifié.

11. Procédé selon la revendication 10, dans lequel l'identification de l'au moins un dispositif de haute accumulation d'énergie inclut l'analyse de données reçues d'une pluralité de modules d'état de charge à l'aide d'une unité de commande de générateur, dans lequel chaque module d'état de charge correspond à un dispositif de haute accumulation d'énergie unique.

12. Procédé selon la revendication 11, dans lequel l'analyse des données comprend la comparaison d'un état de charge détecté de chaque dispositif de haute accumulation d'énergie.

13. Procédé selon la revendication 10, comprenant en outre la fourniture d'une alimentation opérationnelle à une unité de commande de générateur et à chacun d'une pluralité de modules d'état de charge à partir d'un seul convertisseur c.c-c.c.

14. Procédé selon la revendication 10, comprenant en outre la charge de l'au moins un dispositif de haute accumulation d'énergie, par rapport à un restant des dispositifs de haute accumulation d'énergie, par modification d'un courant d'enroulement de pôle de stator d'un pôle de stator correspondant dans un générateur à reluctance commutée.

15. Procédé selon la revendication 14, dans lequel la modification d'un courant d'enroulement de pôle de stator comprend la fourniture d'un courant d'enroulement de pôle de stator passé en ordre à un régulateur de courant, la conversion du courant d'enroulement de pôle de stator passé en ordre en opérations à pont en H asymétrique à l'aide dudit régulateur de courant, et la génération du courant d'enroulement de pôle de stator à l'aide dudit pont en H asymétrique.
